(19)

Europäisches
Patentamt
European
Patent Office
Office européen
des brevets

(11) **EP 2 380 860 A1**

(12) **EUROPEAN PATENT APPLICATION**

(43) Date of publication:
26.10.2011 Bulletin 2011/43

(51) Int Cl.:
*C04B 14/30* (2006.01)       *C04B 20/10* (2006.01)
*C09C 1/24* (2006.01)

(21) Application number: 10004322.3

(22) Date of filing: 23.04.2010

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA ME RS**

(71) Applicant: **Rockwood Italia SpA
10148 Torino (IT)**

(72) Inventors:
• **Ripandelli, Gerardo
15020 Mombello Monferrato (AL) (IT)**
• **Fontana, Daniela
10137 Torino (TO) (IT)**

(74) Representative: **Maiwald, Walter
Maiwald Patentanwalts GmbH
Elisenhof
Elisenstrasse 3
80335 München (DE)**

(54) **Polysiloxane-coated iron oxide pigments**

(57)      The present invention relates to iron oxide particles, consisting of a core and a coating, wherein the core is essentially selected from FeO(OH), $Fe_2O_3$, or $Fe_3O_4$, and mixtures thereof, and the coating comprises a polysiloxane coating, wherein the polysiloxane coating is present in an amount of 0.1 % to 10% by weight based on the weight of the core.

**EP 2 380 860 A1**

**Description**

**Field of the invention**

The present invention relates to iron oxide particles typically selected from FeO(OH), $Fe_2O_3$, or $Fe_3O_4$, and mixtures thereof, having a polysiloxane coating. That is to say, the iron oxide particles consist of a core and a coating comprising a polysiloxane coating in a defined amount based on the weight of the core. The core is essentially selected from FeO(OH), $Fe_2O_3$, or $Fe_3O_4$, and mixtures thereof. The coated iron oxide particles are suitable as pigments, e.g., for use in the coloring of cementitious material such as concrete. The present invention also relates to an iron oxide granulate obtainable from the iron oxide particles as well as to a cementitious composition, comprising the iron oxide particles or the iron oxide granulate. The present invention also features the use of the iron oxide particles or the iron oxide granulates for coloring a cementitious material. The present invention is in addition particularly useful for reducing porosity or reducing efflorescence of a cementitious material such as concrete.

**Background of the invention**

Cementitious materials are well-known in the art. A cementitious material is any kind of various building materials which may be mixed with a liquid, such as water, to form a plastic paste, and to which an aggregate may be added. Examples of known cementitious materials include cements, limes, mortar, etc. The cementitious material (with or without an aggregate) provides plasticity, cohesive, and adhesive properties when it is mixed with water. These properties are necessary for its placement and formation into a rigid mass. Cementitious materials are commonly used e.g. for the provision of concrete. Concrete is a construction material composed of cement (commonly Portland cement) as well as other cementitious materials such as fly ash and slag cement, aggregate (generally a coarse aggregate made of crushed rocks such as limestone, or granite, plus a fine aggregate such as sand), water, and chemical admixtures. Concrete solidifies and hardens after mixing with water and placement due to a chemical process known as hydration. The water reacts with the cement, which bonds the other components together, eventually creating a stone-like material. Concrete is, for example, used to make pavements, architectural structures, foundations, rooftile or manufactured concrete products such as block and paver.

The use of pigments for coloring cementitious material such as concrete is also known in the art. There has been a desire for some time to produce colored concrete to improve the decorative appearance of the concrete or cement-based compositions. For example, U.S. Pat. No. 5,735,094 discloses a process for applying an ornamental coating comprised of liquid mortar that includes a color pigment. The addition of dyes and pigments to the cementitious materials has also enjoyed wide application in the above-mentioned cementitious materials. A pigment, as related to its use in concrete, mortar and cement paste, is a fine dry powder, dry granules, aqueous suspension, or slurry, of the powder or granules, insoluble and inert to the concrete ingredients and which imparts a specific color to the product. The color of a pigment can be described in terms of the CIEL*a*b* color coordinates L*, a*, b* representing lightness, red-green color space and yellow-blue color space after incorporation in an appropriate material such as a cementitious composition. Pigments may be based on mineral oxides.

When cementitious material such as concrete is manufactured, stored, or exposed to weather, salts and water soluble minerals in the concrete often form whitish salt coatings on the concrete's surface. These water-soluble concrete components can migrate via water through the concrete capillaries and pores by diffusion processes to the concrete surface. Once a salt solution is dried by wind and weather on the concrete surface, salts precipitate and form the whitish, sometimes yellowish and even brownish coating. These salt deposits are called "efflorescence". Due to its very nature, hydrated cement is an inexhaustible source for such efflorescence. Although these efflorescence deposits have no known negative impact upon the desired mechanical properties of concrete, they do cover the concrete surface and hide the wanted structures and colors of the concrete product. They often convey to concrete an unwanted gray and pale look that is responsible for the concrete's bad visual reputation. For aesthetic reasons, efflorescence is usually unwanted, as it can diminish the commercial value of exposed concrete products significantly. Guided by the above-described mechanism of efflorescence, a promising way to avoid or diminish efflorescence is to block the pores and capillaries present in concrete or to reduce the number or diameters of them, to diminish and even avoid the diffusion processes discussed above. Therefore, it is believed that a reduction of the porosity of concrete supports the reduction of efflorescence.

Polysiloxanes are also well-known in the art. Polysiloxanes (also referred to as silicones) are polymers that include silicon together with carbon, hydrogen, oxygen, and sometimes other chemical elements. Some common forms include silicone oil, silicone grease, silicone rubber, and silicone resin. Such polysiloxanes are inorganic polymers with a backbone of the chemical formula $[R_2SiO]_n$, where R is often an organic group such as methyl, ethyl, or phenyl. These materials consist of an inorganic silicon-oxygen backbone (...-Si-O-Si-O-Si-O-...) with side groups attached to the silicon atoms. In some cases, organic side groups can be used to link two or more of these -Si-O- backbones together. By varying the -Si-O- chain lengths, side groups, and crosslinking, silicones can be synthesized with a wide variety of properties and compositions.

Polysiloxane coatings on mineral oxide-including materials are also known. For example, WO 2006/100018 relates to polysiloxane coated metal oxide particles. The polysiloxane coating serves as a sunscreen. Furthermore, JP 2007-070500 describes a method of manufacturing water-dispersible pigments by carrying out a surface treatment of the pigment surface and coating the surface-treated pigment with a special polysiloxane. US 7,473,468 B2 discloses a surface-treated $\alpha$-ferric oxide formed by coating a special $\alpha$-ferric oxide. The coating may include an organopolysiloxane. The surface-treated $\alpha$-ferric oxide particles are suitable for a cosmetic formulation for treating keratin fibers.

US 2007/089246 discloses a composition for treating keratin materials, for example, keratin fibers, comprising, in a cosmetically acceptable medium, at least one electrophilic monomer and at least one pigment and/or at least one filler that have been surface-treated beforehand with at least one organic agent.

JP 2001-172526 describes a yellow pigment comprising (A) a composite metal oxide powder which is based basically on Fe, Ti, and Li, has a crystal phase mainly comprising a pseudobrookite structure, and has an average particle size of 0.1-2.0 $\mu$m, (B) a cover layer which is formed from an organosilane compound or a polysiloxane derived from an alkoxysilane and covers the surfaces of particles of the metal oxide powder, and (C) 1-30% by weight (based on 100% by weight metal oxide powder) organic yellow pigment attached to the cover layer.

EP 1 106 657 relates to iron oxide hydroxide composite particles having an average particle diameter of 0.005 to 1.0 $\mu$m, comprising: iron oxide hydroxide particles as core particles, a coating formed on surface of said iron oxide hydroxide particles, comprising at least one organosilicon compound selected from the group consisting of: (1) organosilane compounds obtainable from alkoxysilane compounds, and (2) polysiloxanes or modified polysiloxanes, and an organic pigment coat formed on said coating layer comprising said organosilicon compound, in an amount of from 1 to 30 parts by weight based on 100 parts by weight of said iron oxide hydroxide particles.

US 2003/091764 discloses a plastic film comprising: a thermoplastic resin and fine composite pigments in an amount of 0.01 to 2.0% by weight, which have an average major axis diameter from 0.005 to less than 0.1 $\mu$m, and comprise: iron oxide hydroxide particle as non-magnetic core particle, a coating formed on surface of said iron oxide hydroxide particle, comprising at least one organosilicon compound selected from the group consisting of: (1) organosilane compounds obtainable from alkoxysilane compounds, and (2) polysiloxanes or modified polysiloxanes, and an organic blue pigment coat formed on said coating comprising said organosilicon compound, in an amount of 1 to 20 parts by weight based on 100 parts by weight of said iron oxide hydroxide particles.

JP 2002-188021 describes a black composite iron oxide pigment comprising an iron oxide granular powder which is formed by coating surfaces of the granular powder with an organosilane compound or polysiloxane formed from an alkoxysilane and making an organic blue pigment adhere to the coated surfaces.

JP 2006-205531 describes a dispersion in which particles 1 $\mu$m-100 $\mu$m in average primary particle size of titanium oxide, zinc oxide, silicon dioxide, aluminum oxide, zirconium oxide, iron oxide, cerium oxide, tungsten oxide, cobalt oxide, or tin oxide are dispersed in a non-volatile silicone such as a methylhydrogenpolysiloxane, a dimethylpolysiloxane-methylhydrogen polysiloxane copolymer.

JP 2008-050388 relates to a water-repellent and oil-repellent pigment obtained by surface treating pigment powder with a perfluoroacrylate copolymer, an alkylalkoxysilane or an alkoxytitanium alkylate.

EP 0 913 431 discloses black iron-based composite particles comprising: (i) black iron oxide particles or black iron oxide hydroxide particles having an average particle size of 0.08 to 1.0 $\mu$m; (ii) a coating layer formed on the surface of said particles (i) said coating layer comprising an organosilicon compound which is: (1) an organosilane compound obtainable by drying or heat-treating an alkoxysilane compound, (2) a polysiloxane or modified polysiloxane, or (3) a fluoroalkyl organosilane compound obtainable by drying or heat-treating a fluoroalkylsilane compound; and (iii) carbon black fine particles having an average particle size of 0.005 to 0.05 $\mu$m, adhered on at least a part of said coating layer.

JP 2007-238820 provides an organopolysiloxane composition comprising: an organopolysiloxane (A) containing two pieces or more of silanol groups (Si-OH) in one molecule; and at least one compound (B) selected from the group consisting of a silicon-containing compound (B0) having a hydrophilic group Q bonded to Si atom and functional group X bonded to Si atom and capable of condensing reaction with the silanol group (Si-OH), its partial hydrolysate, and a condensate of these.

WO 2005/068400 relates to a hydrophobic coating composition comprising: (a) nanoparticles or precursors capable of forming nanoparticles; (b) microparticles; and (c) an organic solvent; whereby, on application of the coating composition to a surface of a substrate and then curing, a hydrophobic coating having both microscale and nanoscale roughness is formed on the surface.

US 2007/0294843 relates to compositions and methods for coloring concrete and other cementitious systems. The coloring is said to have improved durability and retention of the colorant when integrally or surface shake applied to concrete or other cementitious system. The compositions and methods according to US 2007/0294843 include two phases of high grade dispersion in a combination of specifically selected particulate polymers. Although US 2007/0294843 generally mentions also polysiloxanes in a long list of illustrative coating polymers, the documents does not provide a specific embodiment of a polysiloxane coating in a special amount. Furthermore, the document does not explicitly refer to iron oxide based pigments let alone polysiloxane coated iron oxides. The object of US 2007/0294843 is to increase the durability of the coloring. However, US 2007/0294843 is neither concerned with technical solutions for increasing the color properties of iron oxide based pigments for coloring concrete nor with methods for influencing characteristics of the colored concrete such as porosity or efflorescence.

Thus, there remains a need in the art for easy to apply and cost effective ways for influencing a bundle of desired properties of concrete such as high color strength, low porosity or low tendency to efflorescence.

The object of the present invention is the provision of iron oxide particles suitable as pigments in cementitious materials such as concrete, wherein the iron oxide particles should provide an improved color strength. A further object of the present invention is to provide such particles, wherein the use of the pigments for coloring cementitious materials such as concrete leads to a decreased porosity, i.e. microporosity (gel pores and capillary pores), of the concrete. A particular preferred object of the present invention is the provision of iron oxide pigments suitable for imparting color to cementitious material having improved color strength, wherein structures derived from the cementitious material exhibit decreased porosity as defined above and decreased efflorescence.

## Summary of the invention

The present inventors have surprisingly found that polysiloxane coated on iron oxide pigments result in improved color strength of colored concrete in addition to decreased porosity or efflorescence.

Thus, the present invention provides iron oxide particles, consisting of a core and a coating, wherein the core is essentially selected from FeO(OH), $Fe_2O_3$, or $Fe_3O_4$, and mixtures thereof. The coating comprises a polysiloxane coating, wherein the polysiloxane coating is present in an amount of 0.1 % to 10% by weight based on the weight of the core. Preferably, the polysiloxane coating is present on the iron oxide particles in an amount of 0.3% to 5% by weight, more preferably in an amount of 0.5% to 3% by weight, still more preferably 0.75% to 3% by weight, even more preferably 1% to 3% by weight, based on the weight of the core.

In a preferred embodiment, the polysiloxane for coating the iron oxide is selected from polyalkylsiloxane, polyalkoxysiloxane, and polyarylsiloxane. In a more preferred embodiment, the polysiloxane is a polydimethylsiloxane, polydiethylsiloxane, polydipropylsiloxane or polydiphenylsiloxane, and still more preferably is polydimethylsiloxane. The polysiloxane for coating the iron oxide particles preferably has a viscosity of 2 to 2000 cps, more preferably of 10 to 1500 cps, and even more preferably of 50 to 500 cps.

Typically, the core of iron oxide particles is essentially spherical, cubical or acicular.

In a preferred embodiment, the iron oxide particles have an average particle size of 0.01 to 2 $\mu$m (primary particles). In a more preferred embodiment, the primary iron oxide particles have an average particle size of 0.1 to 1 $\mu$m. These primary particles of pigments are typically manufactured and sold as powder forms where the particles are typically agglomerated into powders of micron size or as granulated materials which involve further processing to low dusting, readily dispersible agglomerates of 50 to 1000 $\mu$m in size, for example by processes as described in US patent 4,946,505. Thus, according to an embodiment of the present invention, the iron oxide particles may be present in powder form.

The present invention also relates to an iron oxide granulate obtainable from the iron oxide particles. According to this embodiment, the iron oxide particles are present in granulated form preferably having a particles size of 0.05 to 1 mm (secondary particles), for example 0.2 to 1 mm.

The present invention also relates to a cementitious composition, comprising the iron oxide particles or the iron oxide granulate. In a preferred embodiment, the cementitious composition includes the iron oxide particles or the iron oxide granulate in an amount of up to 8% by weight based on the dry weight of the cement content of the cementitious composition. In a more preferred embodiment, the cementitious composition includes the iron oxide particles or the iron oxide granulate in an amount of 1 to 6% by weight.

The present invention also relates to the use of the iron oxide particles or the iron oxide granulates for coloring a cementitious material. In a preferred embodiment, the iron oxide particles or the iron oxide granulate are used in the cementitious material for reducing porosity of the material produced from the cementitious material. In a further preferred embodiment, the iron oxide particles or the iron oxide granulate are used in the cementitious material for reducing efflorescence of the material produced from the cementitious material. A particular preferred cementitious material is concrete.

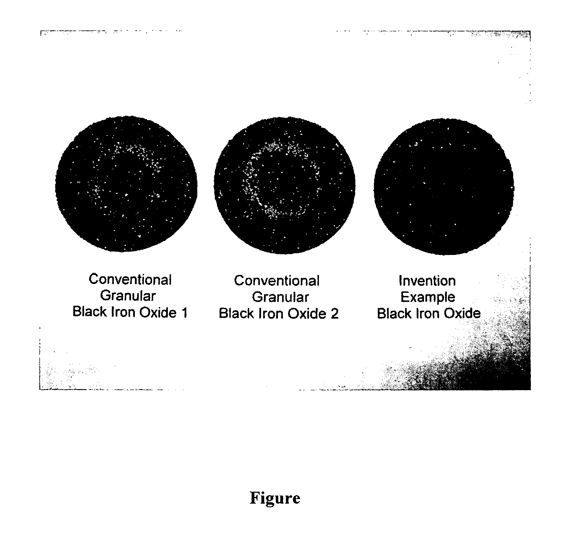

## Brief description of the figure

The figure shows photographs of concrete specimen either prepared with conventional black iron oxide pigment on the one hand or with black iron oxide pigment according to the invention. The concrete specimen including inventive black pigment shows reduced efflorescence.

**Detailed description of the invention**

The iron oxide particles according to the present invention typically consist of two basic structures, i.e. (i) a core and (ii) a coating. The core is essentially selected from FeO(OH) (yellow iron oxide), $Fe_2O_3$ (red iron oxide), or $Fe_3O_4$ (black iron oxide), and mixtures thereof. The coating comprises a polysiloxane coating layer. In some embodiments, the polysiloxane coating is the only coating layer so that the iron oxide particles consist of a core as defined above and the polysiloxane coating. In other embodiments, the polysiloxane additive may be combined with organic materials for promotion of the wetting of the polysiloxane during addition to the pigment, such as derivatized non-ionic fatty acids. In the granulated form of the pigment, a conventional pigment binder and dispersing aid may be used such as a polyacrylate or lignosulfonate. The concentrate can include an additional binding, dispersing and/or wetting agent, e.g. polyacrylate, ethylene-propylene oxide block-polymers, silicates, silanes, lignosulfonates, naphthalene sulfonates, polyvinylacetates, polyvinylalcohol, polynaphthylsulfonates, polyphosphates, ionic fatty acids, non-ionic fatty acids, fatty alcohols, tertiary acetylene-glycol, or amino-alkyl-propylenes.

In order to attain the objects of the present invention, the polysiloxane coating is present in an amount of 0.1 % to 10% by weight based on the weight of the core. In a more preferred embodiment, the polysiloxane coating is present on the iron oxide particles in an amount of 0.3% to 5% by weight, more preferably in an amount of 0.5% to 3% by weight, still more preferably 0.75% to 3% by weight, even more preferably 1 to 3% by weight, based on the weight of the core.

The polysiloxane for coating the iron oxide is preferably selected from polyalkylsiloxane, polyalkoxysiloxane, and polyarylsiloxane. In a more preferred embodiment, the polysiloxane is a polydimethylsiloxane, polydiethylsiloxane, polydipropylsiloxane or polydiphenylsiloxane. In an especially preferred embodiment of the present invention, the polysiloxane is polydimethylsiloxane.

According to the present invention, the polysiloxane can be applied in a wide range of viscosities. For example, the polysiloxane for coating the iron oxide particles has a viscosity of 2 to 2000 cps, preferably of 10 to 1500 cps, and more preferably of 50 to 500 cps. A person skilled in the art is aware of how to determine the viscosity of a composition such as a polysiloxane.

Typically, the core of iron oxide particles is essentially spherical, cubical or acicular. Spherical, cubical or acicular iron oxide particles are known in the art of mineral pigments. According to one embodiment, the present invention is not applied to effect pigments such as pigments in the form of platelets. For example, the iron oxide particles may include red iron oxides which are spherical, black iron oxides which are spherical or cubical and yellow iron oxides which are acicular.

The iron oxide particles preferably have an average particle size of 0.01 to 2 $\mu$m. More preferably, the iron oxide particles have an average particle size of 0.1 to 1 $\mu$m. The particle size of the iron oxide particles refers to the primary particle size of the non-agglomerated pigments. Furthermore, according to an embodiment of the present invention, the iron oxide particles may be present in powder form. Pigment powders are typically characterized as finely ground materials consisting of aggregated primary particles up to several microns in size, typically characterized by retention on a 44 micron sieve of less than 1%. The particle size can be determined as acknowledged in the art.

In one embodiment, the present invention also provides an iron oxide granulate obtainable from the iron oxide particles. According to this embodiment, the iron oxide particles are present in granulated form preferably having a particles size of 0.05 to 1 mm, such as e.g. 0.1 to 0.5 mm. The granulate consists of agglomerates form from the iron oxide particles described above. Methods of how to provide granulated pigments are known in the art such as e.g. in US 4,946,505. The production and use of granules in general have a longstanding tradition in many fields (see H. Rumpf in "Chemie-Ing.-Technik, 30, 1958, No. 3, No. 4, No. 5", or W. C. Peck in "Chemistry and Industry, issue of Dec. 20, 1958, pages 1674 FF). For example, spray granulation (spray drying by means of a disc or nozzle) by the cocurrent or countercurrent method, pelletizing (mixer, fluidized-bed granulator, pan or drum), compacting or extrusion methods are suitable as preparation processes for pigment granulates. Of course, combinations of these granulation processes are also conceivable. Optionally, a granulation aid may be used. Illustrative granulation aids include, but are not limited to typical binding, dispersing and/or wetting agents as mentioned above. An example of a suitable granulation aid is a polyacrylic acid salt such as a sodium salt of polyacrylic acid.

The coating may be applied in any suitable way known in the art. In an illustrative embodiment, the coating is applied by dispersing the iron oxide pigment in water in order to obtain a suspension. Subsequently, the polysiloxane additive is added to the suspension under agitation. In a preferred embodiment, 300-320 g/l of black iron oxides, 280-300 g/l of red iron oxides, or 150 g/l for yellow iron oxides are dispersed in water before adding the polysiloxane agent. The additive may be slowly added under strong agitation. Optionally, a wetting or dispersing agent may additionally be used. Illustrative wetting or dispersing agents already have been mentioned above. An example of a suitable dispersing agent is, e.g., a non-ionic fatty acid derivative.

In another embodiment of the present invention, the polysiloxane coating includes a wetting or dispersing agent in addition to the polysiloxane, wherein the wetting or dispersing agent is selected from polyacrylate, ethylene-propylene oxide block-polymers, silicates, silanes, lignosulfonates, naphthalene sulfonates, polyvinylacetates, polyvinylalcohol, polynaphthylsulfonates, polyphosphates, ionic fatty acids, non-ionic fatty acids, fatty alcohols, tertiary acetylene-glycol, or amino-alkyl-propylenes. In a preferred embodiment, the wetting or dispersing agent is selected from ionic fatty acids, non-ionic fatty acids, fatty alcohols, tertiary acetylene-glycol, or amino-alkyl-propylenes.

The present invention also relates to a cementitious composition, comprising the iron oxide particles or the iron oxide granulate. In one embodiment, the cementitious composition includes the iron oxide particles or the iron oxide granulate in an amount of up to 8% by weight based on the dry weight of the cement contaned in the cementitious composition. In a more preferred embodiment, the cementitious composition includes the iron oxide particles or the iron oxide granulate in an amount of 1% to 6% by weight of the cement content contained in the cementitious composition.

Cementitious compositions are materials well-known in the art that alone have hydraulic cementing properties, and set and harden in the presence of water. Cementitious compositions comprising a conventional pigment are also known. The iron oxide particles of the present invention may be used in cementitious compositions such as lime- and/or cement-bound building materials. The lime-and/or cement-bound building materials are, for example, concrete, cement mortar, plaster and/or sand-lime brick. The iron oxide pigments are mixed with the building materials or they may first be suspended in water and then mixed with the building materials.

For example, known cementitious compositions typically include cement. Cement generally is an inorganic binder that cures in the presence of aqueous media. Examples of cements include portland cement, non-portland cement, and blends derived from these. Examples of portland cement and blends thereof include blastfurnace cement such as ground granulated blast-furnace slag, flyash cement, Pozzolan cement, silica fume cement, masonry cement, expansive cement, colored cement, and the like. Non-portland cements include Plaster of Paris, pozzolan lime cement, slag-lime cement, supersulfated cement, calcium aluminate cement, calcium sulfoaluminate cement, natural cement, and geopolymer cement. Also included is hydraulic hydrated lime, and combinations of the above and other materials. According to one categorization, cements can be hydraulic or non-hydraulic. Cements are used to produce concrete, mortar, tile, building materials such as siding products, bricks, synthetic stones roads, walkways, furniture, vessels, fluid conduits, and the like. In this respect, the cementitious composition is typically mixed with water. Optionally, one or more other liquid carriers may also be used. According to the present invention, a "cementitious composition" is meant to include traditional cement compositions as well as any composites incorporating cementitious and other ingredients. Thus, a cementitious material includes the composite known as fibercement. Fibercement is a composite that is used widely to produce building materials, particularly siding used to cover the exteriors of commercial, residential, farming, or other structures. Fibercement generally is a composite that incorporates a cement binder and one or more organic or inorganic fibers. Cellulose fibers are commonly used in fibercement. Fibercement may also include one or more other ingredients commonly added to cement products including sand, vermiculite, perlite, clay, and/or the like.

The type of cement comprised in the cementitious compositions according to the present invention is not specifically limited. For example, portland cement, modified portland cement, or masonry cement, and mixtures thereof may be employed. By portland cement is meant all cementitious compositions which have a high content of tricalcium silicate and includes portland cement and cements that are chemically similar or analogous to portland cement, the specification for which is set forth in ASTM specification C 150-00.

The cementitious composition described herein may contain other additives or ingredients and should not be limited to the stated formulations. Cement additives that can be added include, but are not limited to: set accelerators, set retarders, air-entraining or air detraining agents, water reducers, corrosion inhibitors, wetting agents, water soluble polymers, strength enhancing agents, rheology modifying agents, water repellents, fibers, dampproofing admixtures, gas formers, permeability reducers, pumping aids, fungicidal admixtures, germicidal admixtures, insecticidal admixtures, finely divided mineral admixtures, alkali-reactivity reducer, bonding admixtures, shrinkage reducing admixtures, aggregate, pozzolan and any other admixture or additive that does not adversely affect the properties of the coloring composition or cementitious composition.

An accelerator that can be used in the coloring composition can include, but is not limited to, a nitrate salt of an alkali metal, alkaline earth metal, or aluminum; a nitrite salt of an alkali metal, alkaline earth metal, or aluminum; a thiocyanate of an alkali metal, alkaline earth metal or aluminum; an alkanolamine; a thiosulphate of an alkali metal, alkaline earth metal, or aluminum; a hydroxide of an alkali metal, alkaline earth metal, or aluminum; a carboxylic acid salt of an alkali metal, alkaline earth metal, or aluminum (preferably calcium formate); a polyhydroxylalkylamine; a halide salt of an alkali metal or alkaline earth metal (preferably bromide).

Set retarding, or also known as delayed-setting or hydration control, admixtures are used to retard, delay, or slow the rate of setting of concrete. They can be added to the concrete mix upon initial batching or sometime after the hydration process has begun. Set retarders are used to offset the accelerating effect of hot weather on the setting of concrete, or delay the initial set of concrete or grout when difficult conditions of placement occur, or problems of delivery to the job site, or to allow time for special finishing processes. Most set retarders also act as low level water reducers and can also be used to entrain some air into concrete. Lignosulfonates, hydroxylated carboxylic acids, borax, gluconic, tartaric and other organic acids and their corresponding salts, phosphonates, certain carbohydrates such as sugars and sugar-acids and mixtures thereof can be used as retarding admixtures.

The term air entrainer includes any chemical that will entrain air in cementitious compositions. Air entrainers can also reduce the surface tension of a composition at low concentration. Air-entraining admixtures are used to purposely entrain microscopic air bubbles into concrete. Air-entrainment dramatically improves the durability of concrete exposed to moisture during cycles of freezing and thawing. In addition, entrained air greatly improves a concrete's resistance to surface scaling caused by chemical deicers. Air entrainment also increases the workability of fresh concrete while eliminating or reducing segregation and bleeding. Materials used to achieve these desired effects can be selected from wood resin, sulfonated lignin, petroleum acids, proteinaceous material, fatty acids, resinous acids, alkylbenzene sulfonates, sulfonated hydrocarbons, vinsol resin, anionic surfactants, cationic surfactants, nonionic surfactants, natural rosin, synthetic rosin, an inorganic air entrainer, synthetic detergents, and their corresponding salts, and mixtures thereof. Air detrainers are used to decrease the air content in the cementitious composition. Examples of air detrainers that can be used comprise, but are not limited to tributyl phosphate, dibutyl phthalate, octyl alcohol, water-insoluble esters of carbonic and boric acid, acetylenic diols, ethylene oxide-propylene oxide block copolymers and silicones.

Corrosion inhibitors in concrete serve to protect embedded reinforcing steel from corrosion. The high alkaline nature of the concrete causes a passive and non-corroding protective oxide film to form on the steel. However, carbonation or the presence of chloride ions from deicers or seawater, together with oxygen can destroy or penetrate the film and result in corrosion. Corrosion-inhibiting admixtures chemically slow this corrosion reaction. The materials most commonly used to inhibit corrosion are calcium nitrite, sodium nitrite, sodium benzoate, certain phosphates or fluorosilicates, fluoroaluminates, amines, organic based water repelling agents, and related chemicals.

Pumping aids are added to concrete mixes to improve pumpability. These admixtures thicken the fluid concrete, i.e., increase its viscosity, to reduce dewatering of the paste while it is under pressure from the pump. Among the materials used as pumping aids in concrete are organic and synthetic polymers, hydroxyethylcellulose (HEC) or HEC blended with dispersants, organic flocculents, organic emulsions of paraffin, coal tar, asphalt, acrylics, bentonite and pyrogenic silicas, natural pozzolans, fly ash and hydrated lime.

Bacteria and fungal growth on or in hardened concrete may be partially controlled through the use of fungicidal, germicidal, and insecticidal admixtures. The most effective materials for these purposes are polyhalogenated phenols, dialdrin emulsions, and copper compounds.

Finely divided mineral admixtures are materials in powder or pulverized form added to concrete before or during the mixing process to improve or change some of the plastic or hardened properties of portland cement concrete. The finely divided mineral admixtures can be classified according to their chemical or physical properties as: cementitious materials; pozzolans; pozzolanic and cementitious materials; and nominally inert materials.

A pozzolan is a siliceous or aluminosiliceous material that possesses little or no cementitious value but will, in the presence of water and in finely divided form, chemically react with the calcium hydroxide produced during the hydration of portland cement to form materials with cementitious properties. Diatomaceous earth, opaline cherts, clays, shales, fly ash, silica fume, volcanic tuffs and pumicites are some of the known pozzolans. Certain ground granulated blast-furnace slags and high calcium fly ashes possess both pozzolanic and cementitious properties. Natural pozzolan is a term of art used to define the pozzolans that occur in nature, such as volcanic tuffs, pumices, trasses, diatomaceous earths, opaline, cherts, and some shales. Nominally inert materials can also include finely divided raw quartz, dolomites, limestones, marble, granite, and others. Fly ash is defined in ASTM C618.

Alkali-reactivity reducers can reduce the alkali-aggregate reaction and limit the disruptive expansion forces that this reaction can produce in hardened concrete. Pozzolans (fly ash, silica fume), blast-furnace slag, salts of lithium and barium are especially effective.

Fresh concrete can sometimes be harsh because of faulty mixture proportions or certain aggregate characteristics such as particle shape and improper grading. Under these conditions, entrained air, which acts like a lubricant, can be used as a workability improving agent. Other workability agents include certain water reducing admixtures, some viscosity modifying admixtures and certain finely divided admixtures.

In the construction field, many methods of protecting concrete from tensile stresses and subsequent cracking have been developed through the years. One modem method involves distributing fibers throughout a fresh concrete mixture. Upon hardening, this concrete is referred to as fiber-reinforced concrete. Fibers can be made of zirconium materials, carbon, steel, fiberglass, or synthetic materials, e.g., polypropylene, nylon, polyethylene, polyester, rayon, high-strength aramid, or mixtures thereof.

The shrinkage reducing agent which can be used comprises but is not limited to $RO(AO)_{1-10}H$, wherein R is a $C_{1-5}$ alkyl or $C_{5-6}$ cycloalkyl radical and A is a $C_{2-3}$ alkylene radical, alkali metal sulfate, alkaline earth metal sulfates, alkaline earth oxides, preferably sodium sulfate and calcium oxide.

Aggregate can be included in the cementitious formulation to provide for mortars which include fine aggregate, and concretes which also include coarse aggregate. The fine aggregate are materials that almost entirely pass through a Number 4 sieve (ASTM C 125 and ASTM C 33), such as silica sand. The coarse aggregate are materials that are predominantly retained on a Number 4 sieve (ASTM C 125 and ASTM C 33), such as silica, quartz, crushed round marble, glass spheres, granite, limestone, calcite, feldspar, alluvial sands, sands or any other durable aggregate, and mixtures thereof.

In one embodiment, the cementitious formulation may be applied with a water-to-cementitious materials ratio of about 0.38 to about 0.65.

According to a further embodiment, the present invention also relates to the use of the iron oxide particles or the iron oxide granulates for coloring a cementitious material. The polysiloxane coating results in an improved brightness or tinting strength tinting strength of the pigments. Furthermore, it has been surprisingly found that the iron oxide particles or the iron oxide granulate when used in the cementitious material result in reducing porosity of the material produced from the cementitious material. The term "porosity" refers in the sense of the present invention especially to the microporosity of the obtained material (gel pores and capillary pores). In addition, it also has been surprisingly found that the iron oxide particles or the iron oxide granulate when used in the cementitious material result in reducing efflorescence of the material produced from the cementitious material. In a preferred embodiment according to the present invention, the cementitious material is concrete.

A suitable method for testing the obtained color and color improvement is described in the examples. Colorimetric abbreviations and calculations, as known from the CIEL*a*b* system, are used. Color properties are measured with a spectrophotometer (settings: Light source D65, observation angle 2°, specular component excluded). The tinting strength is calculated directly by the spectrophotometer as area under the absorption curve.

The present invention also relates to a method of improving the color strength of iron oxide pigments in cementitious materials such as concrete. The method comprises the step of coating the iron oxide pigment particles with a polysiloxane as described above. The present invention also relates to a method of reducing the porosity of a hardened cementitious material such as concrete by adding polysiloxane coated iron oxide pigments as defined above to the cementitious material before hardening. Furthermore, the present invention also covers a method of reducing efflorescence of hardened cementitious material by adding polysiloxane coated iron oxide pigments as defined above to the cementitious material before hardening.

Suitable tests for the obtained porosity and the reduction thereof are described in the examples. The same applies to a suitable test for the reduction in efflorescence.

**Examples**

Every test was performed as follows:

1) The iron oxide pigment used in the test can be prepared according to any method known for the production of yellow, red or black iron oxides;
2) The suspension derived by step 1) is washed and filtered, obtaining a filter cake with a dry fraction of about 30% to 60% depending on the type of oxide;
3) The filter cake is re-dispersed in water, in order to obtain a suspension of:

- 300-320 g/l for black iron oxides;

- 280-300 g/l for red iron oxides;

- 150 g/l for yellow iron oxides;

4) Under strong agitation, the additive is slowly added to the suspension; the amount indicated in the following is referred to the dry iron oxide;
5) The suspension is dried in laboratory oven and crushed to obtain a homogeneous powder.

A list of the performed tests is reported in the following table:

| BLACK IRON OXIDE | | |
|---|---|---|
| Trial # | Pigment type | Treatment description |
| B1 | Ferroxide 81 | 1.5% Momentive Oil M100 |
| B2 | Ferroxide 81 | 1.5% Momentive Oil M100 + 1% Evonik Tego Dispers 740W + 0.5% Lamberti Reotan L |
| B3 | Ferroxide 81 | 1.5% Momentive Oil M100 + 1% Evonik Tego Dispers 740W |
| B4 | Ferroxide 81 | 1.5% Wacker® L051 |

(continued)

| BLACK IRON OXIDE | | |
|---|---|---|
| Trial # | Pigment type | Treatment description |
| B5 | Ferroxide 81 | 2% Wacker® L656 |
| B6 | Ferroxide 81 | 2% Wacker® TNE50 |
| B7 | Ferroxide 81 | 2.5% Wacker® E37 |
| B8 | Ferroxide 81 | 1.5% Wacker® AK100 |
| YELLOW IRON OXIDE | | |
| Trial # | Pigment type | Treatment description |
| Y1 | Ferroxide 49 | 1.5% Momentive Oil M100 |
| Y2 | Ferroxide 49 | 3% Momentive Oil M100 |
| Y3 | Ferroxide 49 | 4.5% Momentive Oil M100 |
| Y4 | Ferroxide 48 | 3% Momentive Oil M100 |
| Y5 | Ferroxide 48 | 3% Momentive Oil M100 + 2% Evonik Tego Dispers 740W |
| Y6 | Ferroxide 48 | 4.5% Wacker® TNE50 + 2% Evonik Tego Dispers 740W |
| Y7 | Ferroxide 48 | 3% Wacker® GM161 + 2% Evonik Tego Dispers 740W |
| RED IRON OXIDE | | |
| Trial # | Pigment type | Treatment description |
| R1 | Ferroxide 208 | 0.75% Momentive Oil M100 |
| R2 | Ferroxide 208 | 1.5% Momentive Oil M100 |
| R3 | Ferroxide 212P | 2% Momentive Oil M100 |
| R4 | Ferroxide 212P | 2% Momentive Oil M100 + 1% Evonik Tego Dispers 740W |
| R5 | Ferroxide 212P | 2% Momentive Oil M100 + 1% Evonik Tego Dispers 740W + 1% Lamberti Reotan L |
| R6 | Ferroxide 212P | 3% Wacker® TNE50 + 1% Evonik Tego Dispers 740W |

The used additives are:

- Momentive Oil M100: polydimethylsiloxane with a viscosity of 100 mPa·s
- Evonik Tego Dispers 740W: derivative of non-ionic fatty acid
- Lamberti Reotan L: sodium salt of polyacrylic acid
- Wacker® L051: polyether functional polydimethylsiloxane with a viscosity of 800 mPa·s
- Wacker® L656: aminofunctional polydimethylsiloxane with a viscosity of 25 mPa·s
- Wacker® TNE50: nonionic oil-in-water-emulsion of a polysiloxane containing alkyl and aralkyl organic groups with a viscosity of 1500 mPa·s
- Wacker® E37: nonionic/anionic oil-in-water emulsion of polydimethylsiloxanes and silicone resins
- Wacker® AK100: polydimethylsiloxane with a viscosity of 95-105 mPa·s
- Wacker® GM161: polydimethylsiloxane modified by alkyl functions with a viscosity of 200 mPa·s.

All the additives, except for Evonik Tego Dispers 740W, and Lamberti Reotan L are polysiloxane-based products. Lamberti Reotan L is used for the production of pigments in granular form. Evonik Tego Dispers 740W is a dispersing agent.

**Color tests:**

Concrete specimens containing the coated iron oxide pigment were prepared according to EN 12878 with the following modifications:

1) Pigment dosage:

- 6% calculated on cement for yellow pigments
- 3% calculated on cement for red and black pigments

2) Reading of color shade and tinting strength after curing and drying.
3) Reading the color characteristics by:

- Spectrophotometer Minolta 300 for $\Delta L$, $\Delta a$ and $\Delta b$
- Spectrophotometer Gardner 9000 for tinting strength.

Color results are reported in the following table. Comparisons were carried out with specimens prepared with the starting iron oxide pigment.

| BLACK IRON OXIDE | | | | | |
|---|---|---|---|---|---|
| Trial # | Reference | $\Delta L^*$ | $\Delta a^*$ | $\Delta a^*$ | TS [%] |
| B1 | Ferroxide 81 | -2.10 | 0.12 | -0.79 | 115 |
| B2 | Ferroxide 81 | -2.83 | -0.19 | -0.78 | 124 |
| B3 | Ferroxide 81 | -3.14 | -0.12 | -0.79 | 125 |
| B4 | Ferroxide 81 | -0.25 | -0.30 | -0.73 | 102 |
| B5 | Ferroxide 81 | -0.15 | -0.16 | -1.04 | 101 |
| B6 | Ferroxide 81 | -1.40 | -0.38 | -0.52 | 113 |
| B7 | Ferroxide 81 | -1.37 | -0.07 | -0.42 | 110 |
| B8 | Ferroxide 81 | -1.25 | -0.17 | -0.99 | 108 |
| YELLOW IRON OXIDE | | | | | |
| Trial # | Reference | $\Delta L^*$ | $\Delta a^*$ | $\Delta a^*$ | TS [%] |
| Y1 | Ferroxide 49 | -0.19 | 0.43 | 1.03 | 103 |
| Y2 | Ferroxide 49 | 0.87 | 0.34 | 1.69 | 100 |
| Y3 | Ferroxide 49 | 0.28 | 0.23 | 0.60 | 100 |
| Y4 | Ferroxide 48 | 0.13 | -0.16 | 1.34 | 98 |
| Y5 | Ferroxide 48 | 1.62 | -0.20 | 1.46 | 96 |
| Y6 | Ferroxide 48 | 1.60 | -0.25 | 1.36 | 98 |
| Y7 | Ferroxide 48 | 1.88 | -0.48 | 1.49 | 94.5 |
| RED IRON OXIDE | | | | | |
| Trial # | Reference | $\Delta L^*$ | $\Delta a^*$ | $\Delta b^*$ | TS [%] |
| R1 | Ferroxide 208 | 0.7 | 0.25 | 0.13 | |
| R2 | Ferroxide 208 | 1.41 | 1.54 | 0.66 | |
| R3 | Ferroxide 212P | 0.81 | 0.72 | 0.9 | 103 |
| R4 | Ferroxide 212P | 0.68 | 1.15 | 1.32 | 106 |
| R5 | Ferroxide 212P | 0.08 | 1.22 | 1.4 | 108 |
| R6 | Ferroxide 212P | -1.05 | 3.07 | 0.31 | 110 |

*Black iron oxides:*

Every polysiloxane additive supplies improved color characteristics to the original black iron oxide: the tinting strength increases, the color results darker (negative $\Delta L^*$) and tends to bluer shades (negative $\Delta b^*$). The addition of the dispersing agent further improves such characteristics. In presence of the dispersing agent, as used in the granular form of the pigment (presence of the polyacrylate), high color characteristics are maintained.

*Yellow iron oxides:*

The tested polysiloxanes supply improved color characteristics to the original yellow iron oxides: the color becomes cleaner and more brilliant (positive $\Delta L^*$ and $\Delta b^*$). The presence of the dispersing agent further improves such characteristics.

*Red iron oxides:*

The polydimethylsiloxane treated red iron oxides exhibit a lighter and redder color (positive $\Delta L^*$ and $\Delta a^*$). The emulsion of polysiloxanes also gives a much redder color, although a darker color. The presence of the dispersing agent improves such characteristics.

**Water absorption tests:**

The water absorption test serves for evaluating the porosity of the obtained material. A capillary water absorption test is used as follows:

**Capillary water absorption ($W_{ak}$) according to DIN EN 480-5**

The samples (standard + test sample; minimum height = 100 mm; ratio height:diameter $\geq$3) have to be dried at $40\pm2$°C for 14 days, cooled down to 20°C and weighed ($m_{kd}$). They are placed on triangular ridges in a climate chamber (standard climate 20/65) in water thus that their bottom is completely wetted with water and immersed approx. $5\pm1$ mm. The samples are covered with a glass or plastic cover maintaining a distance of approx. 10 mm to the samples. Samples are weighed after 3, 6, 24 and 72 hours ($m_{wak}$).
Water absorption is calculated in relation to the surface area:

$$W_{ak} = \frac{m_{wak} - m_{kd}}{A}$$

where A is the area of the bottom surface.
The water absorption coefficient W is calculated from the surface related water absorption at a certain time *t* ($W_{akt}$) and the time *t* (see also DIN 52 617):

$$W = \frac{W_{akt}}{\sqrt{t}}$$

Due to swelling there is not in all cases a linear correlation between water absorption and square root of *t*. Therefore the water absorption coefficient is calculated after 24 hours:

$$W_{24} = \frac{W_{ak24}}{\sqrt{24}}$$

A pigment composition obtained by spray granulation as follows is used for the capillary water absorption test:

1) A suspension of black iron oxide (ferroxide 81) is washed and filtered according to the standard plant procedures;
2) The obtained filter cake is redispersed in water, in order to obtain a suspension with a dry fraction of 30-35 weight%;
3) Under strong agitation, 1.5% of Momentive Oil M100 (based on the weight of the dry iron oxide) is added to the suspension;

4) The suspension is dried in a Stork-Bowen drier to give iron oxide powder;

5) The obtained powder is redispersed in water, in order to obtain a suspension with a dry fraction of 40-50% w/w;

6) Under strong agitation, 1.9% of Lamberti Reotan L (referred to the dry iron oxide) is added to the suspension;

7) The suspension is fed to a spray drier in order to obtain the dry pigment in granular form.

The results (capillary water absorption according to DIN EN 480-5) are as follows:

After 1 day

| Not pigmented reference sample: | 0,007g/mm$^2$ |
| Pigmented test sample: | 0.004g/mm$^2$ |

Water absorption reduction of the pigmented sample: 43%

After 7 days

| Not pigmented reference sample: | 0,015g/mm$^2$ |
| Pigmented test sample: | 0.01 g/mm$^2$ |

Water absorption reduction of the pigmented sample: 33%

The test may be repeated after, e.g., 91 days.

**Efflorescence reduction:**

Concrete specimens of 7 cm diameter prepared with a traditional black iron oxide pigment and the black iron oxide pigment treated with a polydimethylsiloxane are wetted several times with some water droplets allowing them to dry out completely at ambient temperature between the single wetting processes. As can be seen from the figure , efflorescence is observed on the specimens with the traditional pigment, whereas no efflorescence is observed on the specimens prepared with the coated pigment. The comparative specimen were prepared with a conventional granular black iron oxide 1; conventional black iron oxide 2. The inventive example is prepared using polysiloxane treated black iron oxide as described above in connection with the capillary water absorption test.

**Claims**

1.  Iron oxide particles, consisting of a core and a coating,
    wherein the core is essentially selected from FeO(OH), Fe$_2$O$_3$, or Fe$_3$O$_4$, and mixtures thereof, and the coating comprises a polysiloxane coating, wherein the polysiloxane coating is present in an amount of 0.1% to 10% by weight based on the weight of the core.

2.  Iron oxide particles according to claim 1,
    wherein the polysiloxane coating is present in an amount of 0.3% to 5% by weight, preferably 0.5% to 3% by weight, more preferably 0.75 % to 3% by weight, even more preferably 1% to 3 % by weight, based on the weight of the core.

3.  Iron oxide particles according to claim 1 or claim 2,
    wherein the polysiloxane is selected from polyalkylsiloxane, polyalkoxysiloxane, and polyarylsiloxane.

4.  Iron oxide particles according to any one of claims 1-3,
    wherein the polysiloxane is a polydimethylsiloxane, polydiethylsiloxane, polydipropylsiloxane or polydiphenylsiloxane, and preferably is polydimethylsiloxane.

**5.** Iron oxide particles according to any one of claims 1-4, wherein the polysiloxane has a viscosity of 2 to 2000 cps, preferably has a viscosity of 10 to 1500 cps, and more preferably has a viscosity of 50 to 500 cps.

**6.** Iron oxide particles according to any one of claims 1-5, wherein the core is essentially spherical, cubical or acicular.

**7.** Iron oxide particles according to any one of claims 1-6, wherein the particles have an average particle size of 0.01 to 2 $\mu$m, preferably 0.1 to 1 $\mu$m.

**8.** Iron oxide particles according to claim 7, wherein the iron oxide particles are present in powder form.

**9.** Iron oxide granulate obtainable from the iron oxide particles according to any one of claims 1 to 8, wherein the iron oxide particles are present in granulated form having a particles size of 0.05 to 1 mm.

**10.** Cementitious composition, comprising iron oxide particles or an iron oxide granulate according to any one of claims 1 to 9.

**11.** Cementitious composition according to claim 10, wherein the iron oxide particles are included in the composition in an amount of up to 8% by weight, preferably is included in an amount of 1% to 6% by weight based on the dry weight of the cement content of the cementitious composition.

**12.** Use of iron oxide particles or iron oxide granulate according to any one of claims 1 to 9 for coloring a cementitious material.

**13.** Use according to claim 12 for reducing porosity of the material produced from the cementitious material.

**14.** Use according to claim 12 or claim 13 for reducing efflorescence of the material produced from the cementitious material.

**15.** Use according to any one of claims 12 to 14, wherein the cementitious material is concrete.

|Conventional|Conventional|Invention|
|Granular|Granular|Example|
|Black Iron Oxide 1|Black Iron Oxide 2|Black Iron Oxide|

**Figure**

Europäisches
Patentamt

European
Patent Office

Office européen
des brevets

## EUROPEAN SEARCH REPORT

Application Number

EP 10 00 4322

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 373 426 A2 (BAYER AG [DE]) 20 June 1990 (1990-06-20) | 1-12,15 | INV.<br>C04B14/30 |
| A | * page 2, lines 1-3 *<br>* page 3, lines 22-41 *<br>* page 4, lines 6-58 *<br>* page 5; table 1 * | 13,14 | C04B20/10<br>C09C1/24 |
| X,D | EP 1 106 657 A2 (TODA KOGYO CORP [JP]) 13 June 2001 (2001-06-13) | 1-9 | |
| Y | * the whole document * | 10-12,15 | |
| X,D | EP 0 913 431 A2 (TODA KOGYO CORP [JP]) 6 May 1999 (1999-05-06) | 1-9 | |
| Y | * the whole document * | 10-12,15 | |
| X,D | EP 1 690 900 A1 (TOYO INK MFG CO [JP]) 16 August 2006 (2006-08-16) | 1-9 | |
| Y | * the whole document * | 10-12,15 | |
| Y,D | US 2007/294843 A1 (SUPPLEE WILLIAM W [US]) 27 December 2007 (2007-12-27) | 10-12,15 | TECHNICAL FIELDS SEARCHED (IPC) |
| A | * the whole document * | 13,14 | C04B<br>C09C |
| X,D | JP 2007 070500 A (DAITO KASEI KOGYO CO LTD) 22 March 2007 (2007-03-22) * the whole document * | 1-9 | |

The present search report has been drawn up for all claims

| Place of search | Date of completion of the search | Examiner |
|---|---|---|
| Munich | 18 October 2010 | Besana, Sonia |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 .................................................................................

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**                    EP 10 00 4322

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2010

| Patent document cited in search report | | Publication date | Patent family member(s) | | Publication date |
|---|---|---|---|---|---|
| EP 0373426 | A2 | 20-06-1990 | AU | 633286 B2 | 28-01-1993 |
| | | | AU | 4597689 A | 21-06-1990 |
| | | | BR | 8906412 A | 28-08-1990 |
| | | | CA | 2005152 A1 | 13-06-1990 |
| | | | DE | 3841848 A1 | 21-06-1990 |
| | | | JP | 2212561 A | 23-08-1990 |
| | | | JP | 2609733 B2 | 14-05-1997 |
| | | | US | 5035748 A | 30-07-1991 |
| EP 1106657 | A2 | 13-06-2001 | DE | 60034296 T2 | 20-12-2007 |
| | | | US | 2001011110 A1 | 02-08-2001 |
| EP 0913431 | A2 | 06-05-1999 | DE | 69806560 D1 | 22-08-2002 |
| | | | DE | 69806560 T2 | 28-11-2002 |
| EP 1690900 | A1 | 16-08-2006 | AU | 2004283261 A1 | 06-05-2005 |
| | | | CA | 2543403 A1 | 06-05-2005 |
| | | | HK | 1097870 A1 | 11-09-2009 |
| | | | JP | 3826933 B2 | 27-09-2006 |
| | | | JP | 2005146233 A | 09-06-2005 |
| | | | WO | 2005040287 A1 | 06-05-2005 |
| | | | KR | 20060123195 A | 01-12-2006 |
| | | | US | 2007078201 A1 | 05-04-2007 |
| US 2007294843 | A1 | 27-12-2007 | NONE | | |
| JP 2007070500 | A | 22-03-2007 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5735094 A
- WO 2006100018 A
- JP 2007070500 A
- US 7473468 B2
- US 2007089246 A
- JP 2001172526 A
- EP 1106657 A
- US 2003091764 A

- JP 2002188021 A
- JP 2006205531 A
- JP 2008050388 A
- EP 0913431 A
- JP 2007238820 A
- WO 2005068400 A
- US 20070294843 A
- US 4946505 A

**Non-patent literature cited in the description**

- **H. RUMPF.** *Chemie-Ing.-Technik,* 1958, vol. 30

- **W. C. PECK.** *Chemistry and Industry,* 1958, 1674